# EUROPÄISCHE PATENTANMELDUNG

(11) **EP 4 640 320 A1**
(43) Veröffentlichungstag der Anmeldung: **29.10.2025**
(21) Anmeldenummer: 24172589.4
(22) Anmeldetag: 25.04.2024
(51) Int. Cl.: B05C 1/08, H01M 4/04, H01M 4/139

(54) **OPTIMIERTES BESCHICHTUNGSVERFAHREN**

(71) Anmelder: Cellforce Group GmbH, 72138 Kirchentellinsfurt (DE)
(72) Erfinder: Schälicke, Gerrit, 72072 Tübingen (DE)
(74) Vertreter: Müller Schupfner & Partner Patent- und Rechtsanwaltspartnerschaft mbB (Muc)

(57) **Zusammenfassung**

Die Erfindung betrifft ein Verfahren zum Aufbringen von mindestens einem flüssigen und/oder pulverförmigen und/oder granulatförmigen Gemisch auf mindestens ein Substrat, wobei das Gemisch in mindestens einen Spaltbereich zwischen mindestens zwei rotierenden Walzen eingebracht wird, wobei die Walzen durch mindestens zwei Folien einer Dosiereinheit zumindest bereichsweise bedeckt werden, wobei das Gemisch in einen Dosierbereich zwischen den beiden Folien der Dosiereinheit hineingeleitet und von der mindestens einen Dosiereinheit in den Spaltbereich zwischen den mindestens zwei Walzen eingebracht wird, wobei das Gemisch nach dem Verlassen der Dosiereinheit und bei einem Verpressen; oder nach dem Verpressen durch die mindestens zwei Walzen auf das mindestens eine Substrat aufgebracht wird oder je nach Ausführung als Film auf einer der Walzen angeordnet wird, um im späteren Prozess auf ein Substrat übertragen zu werden. Des Weiteren betrifft die Erfindung eine Vorrichtung zum Beschichten von mindestens einer Seite mindestens eines Substrats mit einem Gemisch.

## Beschreibung

Die Erfindung betrifft ein Verfahren zum Aufbringen von mindestens einem flüssigen und/oder pulverförmigen und/oder granulatförmigen Gemisch auf mindestens ein Substrat, wobei das Gemisch in mindestens einen Spaltbereich zwischen mindestens zwei rotierenden Walzen eingebracht wird. Des Weiteren betrifft die Erfindung eine Vorrichtung zum Beschichten von mindestens einer Seite mindestens eines Substrats mit einem Gemisch.

Bei der Herstellung von beispielsweise elektrochemischen Speichern, wie beispielsweise einer Lithium-Ionen-Batterie, werden üblicherweise mehrere, einander abwechselnde Lagen von Anoden, Kathoden und Separatoren bereitgestellt und miteinander verbunden. Die Anoden und die Kathoden bestehen üblicherweise aus einer Trägerfolie, die mit einem Aktivmaterial-haltigen Gemisch beschichtet ist. In anderen technischen Gebieten werden ebenfalls Beschichtungsverfahren eingesetzt. Hierfür werden Schüttgüter in einen Kalander, bzw. einer Walzvorrichtung mit parallel verlaufenden Walzenpaaren mit definierter Menge eingebracht, um einen zusammenhängenden Materialfilm in Form einer Beschichtung auszubilden.

Der Materialfilm verlässt den Spaltbereich nach Durchlaufen des Walzenpaares. Das Material kann dabei auf einer der Walzen haften bleiben oder löst sich als freistehender Film ab und wird weiterverarbeitenden Prozessen zugeführt. Der Spalt zwischen den Walzen ist üblicherweise mehrere Größenordnungen kleiner als der Durchmesser der Walzen.

Im Betrieb eines Kalanders mit mehreren Walzen ist der Einzug des Materials regulär durch Maschinen- und Materialparameter bestimmt. Auf dem Umfang der Walzen existiert ein Winkel, bei dem der Übergang von der so genannten Slip-Region in die so genannte Nip-Region stattfindet. Innerhalb der Slip-Region ruht das Material zwischen den Walzen, sodass diese am Material abgleiten.

In Abhängigkeit von den Spannungsverhältnissen innerhalb des Materials und der Reibung an der Grenzfläche zwischen den Walzenoberflächen und dem Material kommt es beim Übergang in die Nip-Region zum Einzug des Materials durch die Walzen in Richtung des kleinsten Abstands im Spaltbereich zwischen den Walzen. Das Material wird aus einem Bereich mit größerem Abstand, innerhalb der Nip-Region auf Walzenumfangsgeschwindigkeit beschleunigt und auf dem Weg zum kleinsten Abstand durch die Walzen kompaktiert. Nach dem Passieren des kleinsten Abstands im Spaltbereich kann das Material teilweise elastisch relaxieren und somit eine Volumenzunahme mit einhergehender Zunahme der Schichtdicke erfahren.

Im Bereich der lösungsmittelfreien Herstellung von Batterie-Elektroden sind Ziel-Filmdicken bzw. Schichtdicken in der Größenordnung von 100 µm gefordert. Diese Schichtdicken sind in Abhängigkeit der Materialeigenschaften üblicherweise durch mehrfaches Walzen von einem großen, initialen Walzenspalt ausgehend, hin zum Zielspalt möglich.

Die Nip-Region, insbesondere die Tiefe dieser Nip-Region innerhalb des Spaltbereichs zwischen den beiden Walzen, kann durch einen sogenannten Nip-Winkel definiert werden. Dieser ist abhängig von der Walzengeometrie, der Oberfläche der Walzen und von der Beschaffenheit des zugeführten Materials. Hierbei entspricht ein 0° Winkel dem kleinsten Abstand zwischen den beiden Walzen. Ausgehend von diesem 0°-Winkel können der Nip-Winkel und die Spalttiefe abgeleitet werden. Bei einem kleinen, initialen Walzenspalt, kann es in Abhängigkeit des sich einstellenden Nip-Winkels dazu kommen, dass zu viel Material zwischen die Walzen eingezogen und verdichtet wird. Dies kann entweder zu einem zu stark verdichteten Film, der auf Grund seiner physikomechanischen Eigenschaften nicht weiter verarbeitbar ist oder auf Grund der auftretenden Kräfte und Momente zu einer Überlast des Walzenaufbaus, mit gegebenenfalls eintretender Beschädigung der Walzenoberflächen, führen. Um das Ziel der geringen, geforderten Schichtdicken in einem kontinuierlichen, industriellen Prozess umzusetzen, werden Mehr-Walzen-Systeme eingesetzt, die mit relativ hohen initialen Walzenspalten beginnen und die Filmdicke innerhalb aller nachfolgender Walzenspalte zunehmend auf die Ziel-Filmdicke reduzieren. Derartige Mehr-Walzen-Systeme können je nach Ausgangslage und Anforderung an das Produkt kostenintensiv und komplex ausgestaltet sein. Bei einer beidseitigen Beschichtung von Substraten muss darüber hinaus die Anzahl der Walzenpaare regulär verdoppelt werden.

Des Weiteren besteht bei klassischen Beschichtungsanlagen aufgrund eines ungleichmäßigen Materialeinzugs das Problem der ungleichmäßigen Beschichtung über die Breite,. Ein über die Beschichtungsbreite gleichmäßig verteilter Einzug des Materials ist derzeit lediglich über eine puffernde Materialvorlage zwischen den Walzen oberhalb des Nip-Winkels möglich. Die Pulvereigenschaften verhindern in der Regel, dass das Material zeitlich optimal in den Spalt dosiert bzw. gerieselt werden kann, ohne nachfolgend ein fehlerhaftes Beschichtungsbild zu erzeugen. Alternative DosierVorrichtungen sind in der Regel starr bzw. statisch ausgebildete trichterbildende Konstruktionen, die üblicherweise keinen Einfluss auf den Nip-Winkel bzw. Einzugswinkel haben.

Die vorliegende Erfindung hat daher die Aufgabe, ein Verfahren und eine Vorrichtung zum Beschichten eines Substrats zu schaffen, durch welche eine gleichmäßigere Beschichtungsbreite umsetzbar ist und die Anzahl der erforderlichen Walzenpaare zum Einstellen einer finalen Schichtdicke reduziert werden kann. Diese Aufgabe wird durch die im Anspruch 1 angegebenen Merkmale gelöst. Weitere vorteilhafte Ausgestaltungen der Erfindung sind Bestandteil der Unteransprüche.

Gemäß einem Aspekt der Erfindung wird ein Verfahren zum Aufbringen von mindestens einem flüssigen und/oder pulverförmigen und/oder granulatförmigen Gemisch auf mindestens ein Substrat bereitgestellt. Dabei kann das Gemisch einseitig oder beidseitig auf das Substrat aufgebracht werden. Je nach Ausgestaltung kann das Gemisch als eine erste Schicht oder als eine zweite oder weitere Schicht bzw. Lage auf das Substrat appliziert werden. Insbesondere kann je nach Ausgestaltung das Verfahren als Trockenbeschichten ausgeführt sein. Ein mögliches Anwendungsgebiet für das erfindungsgemäße Verfahren kann beispielsweise die Herstellung von Lithium Ionen Batterien sein.

Das erfindungsgemäße Verfahren kann mit Hilfe von Lösungsmitteln oder lösungsmittelfrei durchgeführt werden.

Das Gemisch kann hierbei aus einem oder mehreren Materialien bestehen. Dabei können feste und/oder flüssige Stoffe allein oder in Kombination miteinander als Gemisch dienen und auf das Substrat aufgetragen werden.

Das Gemisch wird in mindestens einen Spaltbereich zwischen mindestens zwei rotierenden Walzen eingebracht. Die Walzen können ein Walzenpaar ausbilden und in entgegengesetzte Richtungen rotieren, sodass das Gemisch durch die Walzen in den Spaltbereich hineingezogen werden kann.

Die Walzen werden durch mindestens zwei Folien einer Dosiereinheit zumindest bereichsweise bedeckt. Die Folien der Dosiereinheit können sich über eine gesamte Länge der Walzen erstrecken oder die Walzen entlang ihrer Länge nur teilweise bedecken. Eine Tiefe der Folien bei einem Hineinragen in den Spaltbereich kann vorteilhafterweise eingestellt werden.

Je nach Ausgestaltung können die Folien der Dosiereinheit einlagig oder mehrlagig ausgestaltet sein. Dabei ist eine Ausführung der Folien aus einem metallischen Werkstoff und/oder einem Kunststoff möglich.

Das Gemisch wird in einen Dosierbereich zwischen den beiden Folien der Dosiereinheit hineingeleitet und wird von der mindestens einen Dosiereinheit in den Spaltbereich zwischen den mindestens zwei Walzen eingebracht. Hierdurch kann das Gemisch gezielt durch die Folien in eine bestimmte Tiefe des Spaltbereichs zwischen den Walzen eingebracht werden.

Das Gemisch wird nach dem Verlassen der Dosiereinheit und bei einem Verpressen oder nach dem Verpressen durch die mindestens zwei Walzen direkt oder indirekt auf das mindestens eine Substrat aufgebracht. Hierdurch kann das Substrat zwischen den beiden Walzen und an mindestens einer Folie vorbei geführt werden, um das verdichtete Gemisch auf das Substrat aufzubringen. Alternativ kann das verdichtete Gemisch auf einer der beiden Walzen haften bleiben und anschließend auf eine weitere Walze übertragen oder direkt auf das Substrat aufgetragen werden.

Je nach Ausführung kann das verpresste Gemisch als Film auf mindestens einer Walzen verbleiben, um im späteren Prozess auf das Substrat übertragen zu werden.

Durch das erfindungsgemäße Verfahren kann die Anzahl der erforderlichen Walzenpaare und damit der Spalte zum Einstellen einer finalen Schichtdicke des verdichteten Gemischs reduziert werden. Diese Maßnahme reduziert auch den apparativen Aufwand bei der Herstellung von besonders geringen Schichtdicken im Bereich von einseitigen und beidseitigen Beschichtungen.

Die optimierte Kompaktierung des Gemischs kann durch den definierbaren bzw. einstellbaren Einzug des Gemischs in den Initialspalt oder einen beliebigen anderen Spalt zwischen zwei Walzen realisiert werden. Bei einer vorgegebenen Walzengeometrie und Walzenoberfläche sowie den Materialeigenschaft des Aufgabegutes bzw, Gemischs, kann durch die erfindungsgemäße Dosiereinheit ein weiterer Freiheitsgrad geschaffen werden, um die Tiefe bzw. den Einzugswinkel der Nip-Region innerhalb des Spaltbereichs einzustellen. Diese Maßnahme kann durch die einstellbare Tiefe der Folien umgesetzt werden.

Gemäß einem weiteren Aspekt der Erfindung wird ein Verfahren zum Einbringen eines Gemischs in den Spaltbereich zwischen zwei entgegengesetzt rotierenden Walzen bereitgestellt. Dabei wird das Gemisch durch die Dosiereinheit in den Spaltbereich eingebracht. Hierfür werden mindestens zwei Folien der Dosiereinheit in den Spaltbereich hineingeschoben und zwischen den Folien das Gemisch in den Spaltbereich hineingeleitet. Die Tiefe der in den Spaltbereich hineinragenden Folien kann zum gezielten und kontrollierten Einleiten des Gemischs in den Spaltbereich eingestellt und geregelt werden. Hierdurch kann das Gemisch beispielsweise tiefer bzw. weiter in den Spaltbereich hineingeleitet werden als die reguläre Nip-Region dies ermöglichen würde.

Das Gemisch kann besonders gleichmäßig in den Spaltbereich eingebracht werden, wenn die Folien der Dosiereinheit symmetrisch geformt sind und zum Einbringen des Gemischs in den Spaltbereich gleich tief in den Spaltbereich zwischen den Walzen hineingeschoben werden.

Nach einer weiteren Ausführungsform sind die Folien der Dosiereinheit asymmetrisch geformt und werden zum Einbringen des Gemischs in den Spaltbereich unterschiedlich tief in den Spaltbereich zwischen den Walzen hineingeschoben. Somit können die Folien der Dosiereinheit unterschiedliche lang ausgeführt werden, um beispielsweise das Gemisch auf ein Substrat aufzubringen, welches zwischen einer Folie und einer Walze geführt wird. Durch den Längenunterschied zwischen den Folien kann der Zeitpunkt der Kompaktierung und dem Aufbringen auf das Substrat gesteuert werden.

Die Dosiereinheit kann technisch besonders einfach ausgeführt sein, wenn diese einen Einlass und einen Auslass aufweist, Das mindestens eine Gemisch wird vorteilhafterweise über den Einlass zwischen die Folien hineingeleitet und über den Auslass zwischen den Folien aus der Dosiereinheit hinausgeleitet.

Gemäß einem weiteren Ausführungsbeispiel wird eine Einbringtiefe des Auslasses im Spaltbereich zwischen den Walzen vor dem Einbringen des Gemischs in den Dosierbereich eingestellt. Durch diese Maßnahme kann eine neue und variabel einstellbare Nip-Region umgesetzt werden.

Durch die Dosiereinheit kann eine dynamische in-situ Regelung der Nip-Region erzielt werden, wenn eine Einbringtiefe des Auslasses im Spaltbereich zwischen den Walzen während eines Aufbringens des Gemischs auf das Substrat eingestellt und/oder variiert wird.

Nach einer weiteren Ausführungsform wird die Einbringtiefe der Dosiereinheit basierend auf einer optischen Messung und/oder einer Wegstreckenmessung und/oder einer Winkelmessung und/oder einer direkten Messung mindestens einer elektrischen Größe ermittelt und/oder geregelt. Bevorzugterweise werden von mindestens einem Sensor ermittelte Messdaten von einer Steuereinheit empfangen. Basierend auf den empfangenen Messdaten wird mindestens ein Steuersignal generiert. Hierdurch kann eine aktive Regelung der Tiefe realisiert werden, innerhalb welcher das Gemisch die Folien und damit die Dosiereinheit verlassen kann. Somit kann die Nip-Region adaptiv definiert werden und vor einer durchgeführten Beschichtung oder während einer Beschichtung verändert werden.

Das Gemisch kann entlang der beiden Folien besonders optimal in den Spaltbereich transportiert werden, wenn die mindestens eine Dosiereinheit in gleichmäßige oder ungleichmäßige Schwingungen versetzt wird. Derartige Schwingungen können in eine oder in mehrere Raumrichtungen gerichtet sein, um ein "Fließen" des Gemischs zu begünstigen und einen kontinuierlichen Materialfluss zu erzielen.

Je nach Ausgestaltung kann die Dosiereinheit zusätzlich als ein Materialpuffer fungieren und somit eine ausgleichende Wirkung hinsichtlich der Bereitstellung des Gemischs erfüllen.

Nach einer weiteren Ausführungsform wird das Gemisch innerhalb des Dosierbereichs und/oder vor dem Hineinleiten in den Dosierbereich und/oder nach dem Verlassen des Dosierbereichs mit elektromagnetischer Strahlung mindestens einer Wellenlänge und/oder Wellenlängenbereichs und/oder mit einem Druck beaufschlagt. Durch das Beaufschlagen des Gemischs in verdichteter oder nicht verdichteter Form kann dieses beispielsweise Erwärmt oder chemisch Verändert werden, um gezielt Eigenschaften einzustellen Hierbei kann das Gemisch auch mit einem Überdruck oder Unterdruck beaufschlagt werden.

Die Beschichtung des Substrats kann kontinuierlich oder in diskreten Schritten erfolgen, wenn eine Förderung des mindestens einen Gemischs und eine Bewegung des Substrats gleichzeitig oder einander abwechselnd durchführt wird.

Gemäß einem weiteren Aspekt der Erfindung wird eine Vorrichtung zum Beschichten von mindestens einer Seite mindestens eines Substrats mit einem Gemisch bereitgestellt. Die Vorrichtung weist mindestens zwei rotierende Walzen und mindestens eine Dosiereinheit auf. Die Walzen können ein Walzenpaar ausbilden und sind vorzugsweise entgegengesetzt gerichtet drehbar, um ein Hineinziehen des Gemischs in den Spaltbereich zu ermöglichen.

Die Dosiereinheit weist mindestens zwei Folien auf, welche einen Dosierbereich zum Aufnehmen eines Gemischs ausbilden. Die Folien liegen zumindest bereichsweise auf zwei entgegengesetzt rotierenden Walzen eines Walzenpaares auf und ragen zumindest bereichsweise in einen Spaltbereich zwischen den Walzen hinein. Die Folien bilden einen Auslass der Dosiereinheit zum Ausbringen des Gemischs aus, welcher in seiner Einbringtiefe innerhalb des Spaltbereichs variabel einstellbar ist.

Die Beschichtung kann technisch besonders einfach umgesetzt werden, wenn das Substrat zwischen mindestens einer Walze und mindestens einer Folie durch den Spaltbereich geführt ist. Hierdurch kann das Substrat ebenfalls durch den Spaltbereich geleitet und gleichzeitig mit dem Gemisch beschichtet werden.

Das Substrat kann beispielsweise als eine Folie oder ein Blech ausgeführt sein und einseitig oder beidseitig beschichtet werden. Das Substrat kann aus einem elektrisch leitfähigen oder elektrisch isolierenden Material bestehen. Beispielsweise kann das Substrat aus Kupfer oder einer Aluminiumlegierung bestehen. Darüber hinaus kann das Substrat als ein beschichteter Isolator, als ein elektrisch leitfähiger Kunststoff und dergleichen ausgestaltet sein.

Gemäß eines weiteren Ausführungsbeispiels ist das Substrat entlang mindestens einer Walze des Walzenpaares geführt oder ist entlang mindestens einer dritten Walze geführt, an welche das aus der Dosiereinheit ausgegebene Gemisch direkt oder indirekt übergeben ist. Durch diese Maßnahme kann das verdichtete Substrat nach dem Passieren des Spaltbereichs des ersten Walzenpaars direkt auf das Substrat aufgebracht oder zuvor an mindestens eine dritte Walze übergeben werden. Hierdurch können weitere Verarbeitungsmaßnahmen des Gemischs implementiert werden.

Die Dosiereinheit kann technisch besonders einfach ausgestaltet sein, wenn die Folien der Dosiereinheit aus einem Kunststoff und/oder einem Metall bestehen. Bevorzugterweise sind die Folien jeweils aus einer oder mehreren Materiallagen hergestellt.

Nach einer weiteren Ausführungsform weisen die Folien mindestens einen integrierten Kühlkanal zum Führen eines flüssigen und/oder gasförmigen Kühlmittels auf. Je nach Ausgestaltung können in die Folien oder zwischen zwei Materiallagen Kühlkanäle integriert sein, um eine Überhitzung der Folien zu vermeiden. Derartige Maßnahmen können je nach Vorrichtung auch entfallen, wenn die Folien aus einem metallischen Material hergestellt sind und/oder die Walzen separat gekühlt werden. Der Kühlbedarf kann bei einer zumindest zeitweisen Reduzierung der Rotationsgeschwindigkeit der Walzen minimiert werden.

Gemäß einem weiteren Aspekt der Erfindung wird ein Verfahren zum Erzeugen eines Films bereitgestellt. Der Film kann beispielsweise in Form eines verpressten Gemischs ausgestaltet sein. In einem Schritt erfolgt ein Einbringen von mindestens einem flüssigen und/oder pulverförmigen und/oder granulatförmigen Gemischs in mindestens einen Spaltbereich zwischen mindestens zwei rotierenden Walzen. Die Walzen werden durch mindestens zwei Folien einer Dosiereinheit zumindest bereichsweise bedeckt. Das Gemisch wird in einen Dosierbereich zwischen den beiden Folien der Dosiereinheit hineingeleitet und von der mindestens einen Dosiereinheit in den Spaltbereich zwischen den mindestens zwei Walzen eingebracht. Das Gemisch wird nach dem Verlassen der Dosiereinheit durch die Walzen zu einem Film verpresst. Der Film kann hierbei auf mindestens einer Walze verbleiben und im Rahmen weiterer Prozesse verarbeitet werden oder als freistehender Film von mindestens einer Walze gelöst werden. Nachstehend werden mehrere Ausführungsbeispiele der Erfindung anhand der Zeichnungen näher erläutert. Es zeigen:
Fig. 1 eine Schnittdarstellung einer Vorrichtung gemäß einer ersten Ausführungsform der Erfindung,
Fig. 2 eine Schnittdarstellung einer Vorrichtung gemäß einer zweiten Ausführungsform der Erfindung, und
Fig. 3 eine Schnittdarstellung einer Vorrichtung gemäß einer dritten Ausführungsform der Erfindung.

In den Abbildungen kennzeichnen identische Bezugsziffern dieselben Elemente bzw. konstruktiven Bestandteile. Die Größen und relativen Positionen der Elemente in den Abbildungen sind nicht unbedingt maßstabsgetreu gezeichnet, und einige dieser Elemente sind vergrößert dargestellt und der Übersicht halber angepasst positioniert. Darüber hinaus sollen die besonderen Formen der gezeichneten Elemente keine Informationen über die tatsächliche Form der einzelnen Elemente vermitteln, sondern wurden lediglich zur leichteren Erkennbarkeit in den Abbildungen ausgewählt.

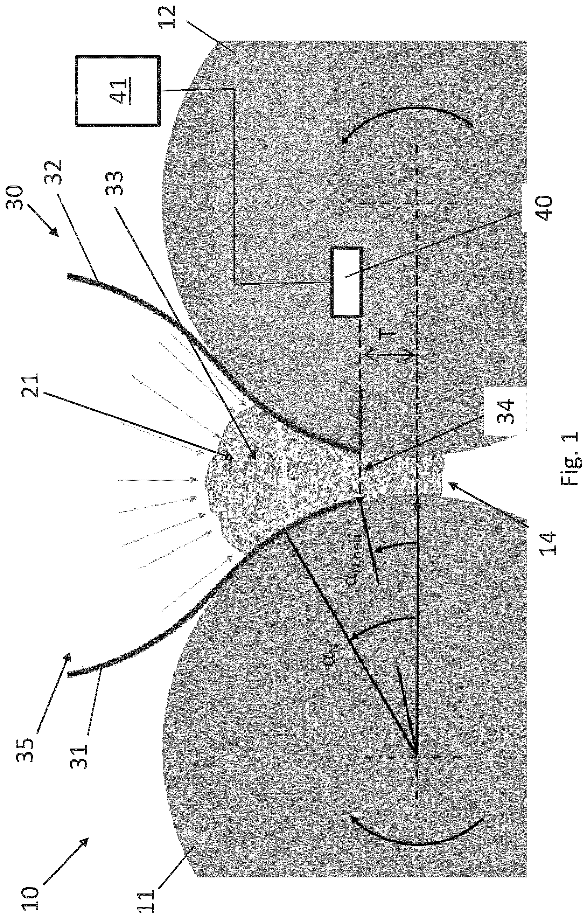

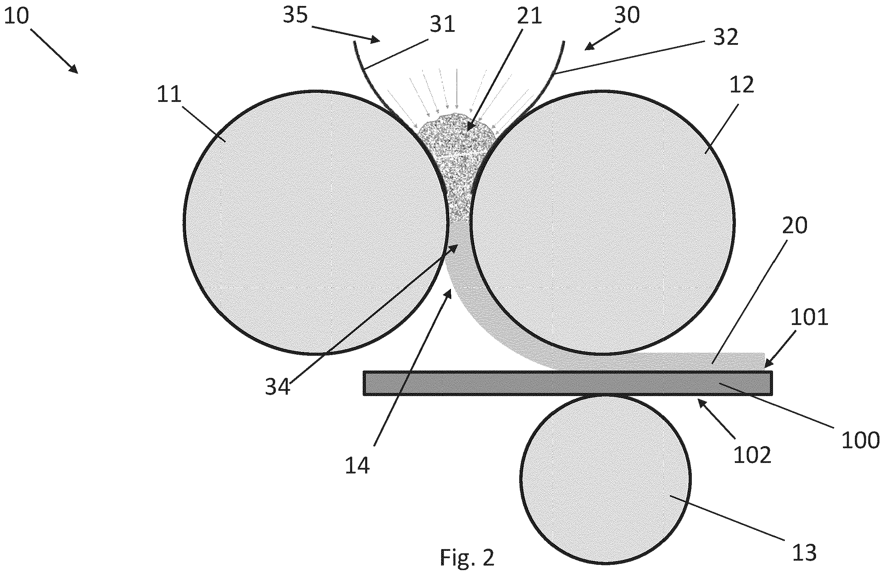

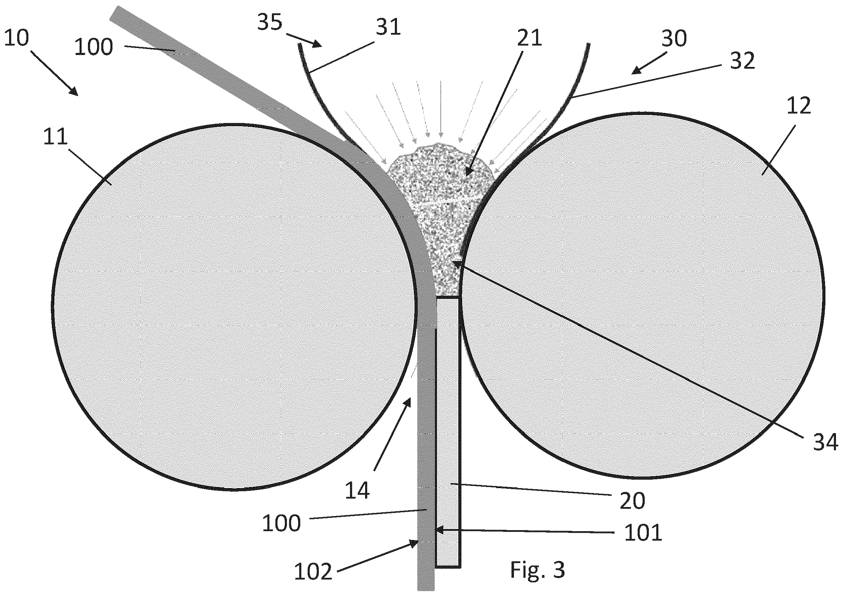

Die Fig. 1 zeigt eine Schnittdarstellung einer Vorrichtung 10 gemäß einer ersten Ausführungsform der Erfindung. Die Vorrichtung 10 dient zum Beschichten von mindestens einer Seite 101, 102 mindestens eines Substrats 100 mit einem Gemisch 20 und weist mindestens zwei rotierende Walzen 11, 12 und mindestens eine Dosiereinheit 30 auf. Ein Substrat 100 ist beispielhaft in der Fig. 2 und Fig. 3 gezeigt.

Eine derartige Vorrichtung 10 kann grundsätzlich in jeder Disziplin der Verfahrenstechnik zur vereinfachten Dosierung von Schüttgütern in einen Kalander bzw. eine Walzvorrichtung parallel verlaufender Walzenpaare, die horizontal angeordnet sind und sich gegenläufig drehen, eingesetzt werden. Das Schüttgut bzw. das Gemisch 20 kann mit definierter Menge in einen Spaltbereich 14 zwischen zwei Walzen 11, 12 eingezogen werden. Durch die einwirkenden Kräfte kann ein zusammenhängender Materialfilm mit einer definierten Schichtdicke ausgebildet werden. Das in loser Form vorliegende Gemisch 21 wird innerhalb des Spaltbereichs 14 zu einem verdichteten Gemisch bzw. dem Materialfilm kompaktiert.

Die Walzen 11, 12 können ein Walzenpaar ausbilden und sind entgegengesetzt gerichtet drehbar, um ein Hineinziehen des losen Gemischs 21 in den Spaltbereich 14 zu ermöglichen. Die Pfeile in der Fig. 1 veranschaulichen die Drehrichtung der Walzen 11, 12.

Die Dosiereinheit 30 weist mindestens zwei Folien 31, 32 auf, welche einen Dosierbereich/ eine Materialvorlage 33 zum Aufnehmen eines unverdichteten Gemischs 21 ausbilden. Die Folien 31, 32 liegen zumindest bereichsweise auf den entgegengesetzt rotierenden Walzen 11, 12 des Walzenpaares auf und ragen zumindest bereichsweise in den Spaltbereich 14 zwischen den Walzen 11, 12 hinein.

Die Folien 31, 32 bilden einen Auslass 34 der Dosiereinheit 30 zum Ausbringen des Gemischs 21 aus, welcher in seiner Einbringtiefe T innerhalb des Spaltbereichs 14 variabel einstellbar ist. Die Einbringtiefe T ist beispielhaft vom einem kleinsten Abstand zwischen den Walzen 11, 12 aus gemessen. Der kleinste Abstand zwischen den Walzen definiert die geringste Spaltbreite und ist üblicherweise entlang der Rotationsachsen der Walzen 11, 12 gegeben. Dieser kleinste Abstand ist auch als 0° Referenz definiert, von dem aus ein Nip-Winkel α_{N} für die Walzen 11, 12 ausgebildet ist.

Über einen Einlass 35 der Dosiereinheit 30 kann das unverdichtete Gemisch 21 in den Dosierbereich 33 zwischen den beiden Folien 31, 32 hineingebracht werden.

Durch die Dosiereinheit 30 kann eine dynamische in-situ Regelung der Nip-Region bzw. des Nip-Winkels α_{N} erzielt werden, wenn eine Einbringtiefe T des Auslasses 34 im Spaltbereich 14 zwischen den Walzen 11, 12 während eines Einbringens des unverdichteten Gemischs 21 eingestellt und/oder variiert wird. Durch diese Maßnahme kann ein neuer Nip-Winkel α_{N,neu} realisiert werden, welcher niedriger als der ursprüngliche bzw. sich einstellende Nip-Winkel α_{N} ist. Das unverdichtete Gemisch 21 kann somit deutlich später und zeitlich präzise durch die Walzen 11, 12 verdichtet bzw. verpresst werden. Die Fig. 1 veranschaulicht den Zusammenhang zwischen dem ursprünglichen Nip-Winkel α_{N} und dem neuen Nip-Winkel α_{N,neu}, welcher sich durch das spätere bzw. tiefere Einbringen des Gemischs 21 einstellt.

Die Einbringtiefe T des Gemischs 21 in den Spaltbereich 14 kann beispielsweise basierend auf einer optischen Messung und/oder einer Wegstreckenmessung geregelt oder eingestellt werden. Hierfür ist ein beispielhafter Sensor 40 vorgesehen. Die von dem Sensor 40 ermittelten Messdaten werden von einer Steuereinheit 41 empfangen. Basierend auf den empfangenen Messdaten wird mindestens ein Steuersignal generiert. Hierdurch kann eine aktive Regelung der Einbringtiefe T realisiert werden, innerhalb welcher das Gemisch 21 die Folien 31, 32 und damit die Dosiereinheit 30 verlassen kann. Somit kann der neue Nip-Winkel α_{N,neu} adaptiv definiert werden und vor einer durchgeführten Beschichtung oder während einer Beschichtung verändert werden.

Für einen optimierten Materialfluss des Gemischs 21 durch die Dosiereinheit 30 kann diese in gleichmäßige oder ungleichmäßige Schwingungen versetzt werden. Ein entsprechender Aktuator ist der Übersicht halber nicht dargestellt. Ein derartiger Aktuator kann ebenfalls durch die Steuereinheit 41 angesteuert werden.

In der Fig. 2 ist eine Schnittdarstellung einer Vorrichtung 10 gemäß einer zweiten Ausführungsform der Erfindung gezeigt. Im Unterschied zur Vorrichtung 10 gemäß der ersten Ausführungsform, wird hier eine mögliche Wechselwirkung zwischen dem Substrat 100 und dem verdichteten Gemisch 20 veranschaulicht.

Die Fig. 2 und die Fig. 3 veranschaulichen beispielhaft ein erfindungsgemäßes Verfahren zum Aufbringen von mindestens einem flüssigen und/oder pulverförmigen und/oder granulatförmigen Gemisch 21 auf mindestens ein Substrat 100.

Im dargestellten Ausführungsbeispiel ist mindestens eine weitere, dritte, Walze 13 vorgesehen. Das Substrat 100 ist entlang der dritten Walze 13 derart geführt, sodass dieses einen Spaltbereich zwischen der zweiten Walze 12 und der dritten Walze 13 passiert. Das verdichtete Gemisch 20 wird bei diesem Ausführungsbeispiel an die zweite Walze 12 "übergeben" bzw. bleibt an dieser Walze 12 nach dem Kompaktieren haften.

Mit Hilfe der dritten Walze 13 kann das Substrat 100 mit dem verdichteten Gemisch 20 in Verbindung gebracht und durch das Gemisch 20 entlang der ersten Seite 101 beschichtet werden. Analog kann das Verfahren auch zum Beschichten von beiden Seiten 101, 102 des Substrats 100 eingesetzt werden. Für eine optimale Ablösung des verdichteten Gemischs 20 von der zweiten Walze 12 kann das Substrat 100 mit einer Grundierung versehen oder anderweitig bearbeitet werden, um die Haftung zwischen dem verdichteten Gemisch 20 und dem Substrat 100 zu verstärken. Das Substrat 100 kann beispielsweise als eine Folie oder als ein Blech ausgeführt sein.

Die Fig. 3 zeigt eine weitere Schnittdarstellung einer Vorrichtung 10 gemäß einer dritten Ausführungsform der Erfindung. Im Unterschied zu den bereits gezeigten Ausführungsformen wird hier das Substrat 100 zwischen einer Walze 11 und einer Folie 31 durch den Spaltbereich 14 hindurch geführt. Hierdurch kann das Substrat 100 ebenfalls durch den Spaltbereich 14 geleitet und gleichzeitig mit dem verdichteten Gemisch 20 beschichtet werden.

## Patentansprüche

1. Verfahren zum Aufbringen von mindestens einem flüssigen und/oder pulverförmigen und/oder granulatförmigen Gemisch (21) auf mindestens ein Substrat (100), wobei das Gemisch (21) in mindestens einen Spaltbereich (14) zwischen mindestens zwei rotierenden Walzen (11, 12) eingebracht wird, wobei die Walzen (11, 12) durch mindestens zwei Folien (31, 32) einer Dosiereinheit (30) zumindest bereichsweise bedeckt werden, wobei das Gemisch (21) in einen Dosierbereich (33) zwischen den beiden Folien (31, 32) der Dosiereinheit (30) hineingeleitet und von der mindestens einen Dosiereinheit (30) in den Spaltbereich (14) zwischen den mindestens zwei Walzen (11, 12) eingebracht wird, wobei das Gemisch (21) nach dem Verlassen der Dosiereinheit (30) und bei einem Verpressen; oder nach dem Verpressen durch die mindestens zwei Walzen (11, 12) auf das mindestens eine Substrat (100) aufgebracht wird.

2. Verfahren nach Anspruch 1, wobei die Folien (31, 32) der Dosiereinheit (30) symmetrisch geformt sind und zum Einbringen des Gemischs (21) in den Spaltbereich (14) gleich tief in den Spaltbereich (14) zwischen den Walzen (11, 12) hineingeschoben werden.

3. Verfahren nach Anspruch 1 oder 2, wobei die Folien (31, 32) der Dosiereinheit (30) asymmetrisch geformt sind und zum Einbringen des Gemischs (21) in den Spaltbereich (14) unterschiedlich tief in den Spaltbereich (14) zwischen den Walzen (11, 12) hineingeschoben werden.

4. Verfahren nach einem der Ansprüche 1 bis 3, wobei die Dosiereinheit (30) einen Einlass (35) und einen Auslass (34) aufweist, wobei das mindestens eine Gemisch (21) über den Einlass (35) zwischen die Folien (31, 32) hineingeleitet wird und über den Auslass (34) zwischen den Folien (31, 32) aus der Dosiereinheit (30) hinausgeleitet wird.

5. Verfahren nach Anspruch 4, wobei eine Einbringtiefe (T) des Auslasses (34) im Spaltbereich (14) zwischen den Walzen (11, 12) vor dem Einbringen des Gemischs (21) in den Dosierbereich (33) eingestellt wird.

6. Verfahren nach Anspruch 4, wobei eine Einbringtiefe (T) des Auslasses (34) im Spaltbereich (14) zwischen den Walzen (11, 12) während eines Aufbringens des Gemischs (21) auf das Substrat (100) eingestellt und/oder variiert wird.

7. Verfahren nach einem der Ansprüche 4 bis 6, wobei die Einbringtiefe (T) der Dosiereinheit (30) basierend auf einer optischen Messung und/oder einer Wegstreckenmessung und/oder einer Winkelmessung und/oder einer direkten Messung mindestens einer elektrischen Größe ermittelt und/oder geregelt wird, wobei von mindestens einem Sensor (40) ermittelte Messdaten von einer Steuereinheit (41) empfangen werden, wobei basierend auf den empfangenen Messdaten mindestens ein Steuersignal generiert wird.

8. Verfahren nach einem der Ansprüche 1 bis 7, wobei die mindestens eine Dosiereinheit (30) in gleichmäßige oder ungleichmäßige Schwingungen versetzt wird.

9. Verfahren nach einem der Ansprüche 1 bis 8, wobei das Gemisch (21) innerhalb des Dosierbereichs (33) und/oder vor dem Hineinleiten in den Dosierbereich (33) und/oder nach dem Verlassen des Dosierbereichs (33) mit elektromagnetischer Strahlung mindestens einer Wellenlänge und/oder Wellenlängenbereichs und/oder mit einem Druck beaufschlagt wird.

10. Verfahren nach einem der Ansprüche 1 bis 9, wobei eine Förderung des mindestens einen Gemischs (21) und eine Bewegung des Substrats (100) gleichzeitig oder einander abwechselnd durchgeführt wird.

11. Vorrichtung (10) zum Beschichten von mindestens einer Seite (101, 102) mindestens eines Substrats (100) mit einem Gemisch (20), aufweisend mindestens zwei rotierende Walzen (11, 12) und aufweisend mindestens eine Dosiereinheit (30), wobei die Dosiereinheit (30) mindestens zwei Folien (31, 32) aufweist, welche einen Dosierbereich (33) zum Aufnehmen eines Gemischs (21) ausbilden, wobei die Folien (31, 32) zumindest bereichsweise auf zwei entgegengesetzt rotierenden Walzen (11, 12) eines Walzenpaares aufliegen und zumindest bereichsweise in einen Spaltbereich (14) zwischen den Walzen (11, 12) hineinragen, wobei die Folien (31, 32) einen Auslass (34) der Dosiereinheit (30) zum Ausbringen des Gemischs (20) ausbilden, welcher in seiner Einbringtiefe (T) innerhalb des Spaltbereichs (14) variabel einstellbar ist.

12. Vorrichtung nach Anspruch 11, wobei die Vorrichtung (10) dazu eingerichtet ist, das Substrat (100) zwischen mindestens einer Walze (11, 12) und mindestens einer Folie (31, 32) durch den Spaltbereich (14) zu führen.

13. Vorrichtung nach Anspruch 11, wobei die Vorrichtung (10) dazu eingerichtet ist, das Substrat (100) entlang mindestens eine Walze (11, 12) des Walzenpaares zu führen und/oder entlang mindestens einer dritten Walze (13) zu führen, an welche das aus der Dosiereinheit ausgegebene Gemisch (20) direkt oder indirekt übergeben ist.

14. Vorrichtung nach einem der Ansprüche 11 bis 13, wobei die Folien (31, 32) der Dosiereinheit (30) aus einem Kunststoff und/oder einem Metall bestehen, wobei die Folien (31, 32) jeweils aus einer oder mehreren Materiallagen hergestellt sind.

15. Vorrichtung nach einem der Ansprüche 11 bis 14, wobei die Folien (31, 32) mindestens einen integrierten Kühlkanal zum Führen eines flüssigen und/oder gasförmigen Kühlmittels aufweisen.
